# EUROPEAN PATENT APPLICATION

(11) **EP 4 380 151 A1**
(43) Date of publication of application: **05.06.2024**
(21) Application number: 23191326.0
(22) Date of filing: 14.08.2023
(51) Int. Cl.: H04N 17/00, H04N 23/54, H04N 23/55, H04N 23/11, H04N 23/57

(54) **PORTABLE ELECTRONIC DEVICE, AND IMAGE-CAPTURING DEVICE AND ASSEMBLY METHOD THEREOF**

(30) Priority: 02.12.2022 TW 111146285
(71) Applicant: Shine Optics Technology Company Limited, Chongqing City (CN)
(72) Inventor: ZHOU, Feng, Chongqing City (CN)
(74) Representative: Viering, Jentschura & Partner mbB Patent- und Rechtsanwälte

(57) **Abstract**

A portable electronic device (Z), and an image-capturing device (S) and an assembling method thereof are provided. The image-capturing device (S) includes a carrier substrate (1), a first image sensing chip (2A), a first filter assembly (3A) and a first lens assembly (4A). The first image sensing chip (2A) is disposed on the bottom side (1002) of the carrier substrate (1) and electrically connected to the carrier substrate (1). The first filter assembly (3A) includes a first support element (31A) disposed on the carrier substrate (1) and a first filter element (32A) configured for cooperating with the first support element (31A). The first support element (31A) is configured to carry the first filter element (32A) such that a11 or a part of the first filter element (32A) can be received within the first through opening (1003). The shortest distance (D) between the first filter element (32A) and the first image sensing chip (2A) can range from 30 µm to 200 µm.

## Description

### FIELD OF THE INVENTION

The present invention relates to a portable electronic device, and an image-capturing device and an assembly method thereof, and more particularly to a portable electronic device for improving the quality of captured images, and an image-capturing device and an assembly method thereof for improving the quality of captured images.

### BACKGROUND OF THE INVENTION

In the image-capturing device of the related art, the filter is supported by a plurality of short brackets to be arranged on the image sensor chip. However, the stability of a single short bracket and the flatness of the short brackets are not easy to control, and the short bracket that cannot be too high will make the filter and the image sensor chip too close, so that the microparticles on the filter will be captured by the image sensor chip (that is to say, the image sensor chip will capture the light spots caused by the blocking of microparticles).

### SUMMARY OF THE INVENTION

In response to the above-referenced technical inadequacy, the present invention provides a portable electronic device, and an image-capturing device and an assembly method thereof, for improving the image-capturing quality.

In order to solve the above-mentioned problems, one of the technical aspects adopted by the present invention is to provide an image-capturing device, which includes a carrier substrate, a first image sensing chip, a second image sensing chip, a first filter assembly, a second filter assembly, a first lens assembly and a second lens assembly. The carrier substrate has a top side, a bottom side, a first through opening and a second through opening, and the first through opening and the second through opening are connected between the top side and the bottom side. The first image sensing chip is disposed on the bottom side of the carrier substrate and electrically connected to the carrier substrate. The second image sensing chip is disposed on the bottom side of the carrier substrate and electrically connected to the carrier substrate. The first filter assembly corresponds to the first image sensing chip, and the first filter assembly includes a first support element disposed on the carrier substrate and a first filter element cooperating with the first support element. The second filter assembly corresponds to the second image sensing chip, and the second filter assembly includes a second support element disposed on the carrier substrate and a second filter element cooperating with the second support element. The first lens assembly corresponds to the first image sensing chip, and the first lens assembly includes a first lens holder disposed on the top side of the carrier substrate and a first optical lens carried by the first lens holder. The second lens assembly corresponds to the second image sensing chip, and the second lens assembly includes a second lens holder disposed on the top side of the carrier substrate and a second optical lens carried by the second lens holder. The first image sensing chip, the first filter assembly and the first lens assembly cooperate with each other to form a first image sensing module for capturing invisible light. The second image sensing chip, the second filter assembly and the second lens assembly cooperate with each other to form a second image sensing module for capturing visible light. The first support element is configured to carry the first filter element, so that all or a part of the first filter element is accommodated in the first through opening. The second support element is configured to carry the second filter element, so that all or a part of the second filter element is accommodated in the second through opening. When at least one first microparticle with a maximum particle size between 5 µm and 25 µm is located on the first filter element, a shortest distance between the first filter element and the first image sensing chip is between 30 µm and 200 µm, so that the first image sensing chip cannot capture a light spot generated due to blocking of the at least one first microparticle. When at least one second microparticle with a maximum particle size between 5 µm and 25 µm is located on the second filter element, a shortest distance between the second filter element and the second image sensing chip is between 30 µm and 200 µm, so that the second image sensing chip cannot capture a light spot generated due to blocking of the at least one second microparticle.

In order to solve the above-mentioned problems, another one of the technical aspects adopted by the present invention is to provide a method of assembling an image-capturing device, which includes: placing at least one test microparticle with a maximum particle size between 5 µm and 25 µm on a test filter element; adjusting a shortest distance from the test filter element to a test image sensor chip until the test image sensor chip cannot capture a light spot generated due to blocking of the at least one test microparticle, in order to obtain a reference data of the shortest distance between the test filter element and the test image sensor chip ranging from 30 µm to 200 µm; and according to the reference data, placing a first image sensing chip, a second image sensing chip, a first filter assembly, a second filter assembly, a first lens assembly and a second lens assembly on a carrier substrate so as to define a shortest distance between the first filter element and the first image sensing chip ranging from 30 µm to 200 µm, and a shortest distance between the second filter element and the second image sensing chip ranging from 30 µm to 200 µm. The carrier substrate has a top side, a bottom side, a first through opening and a second through opening, and the first through opening and the second through opening are connected between the top side and the bottom side. The first image sensing chip and the second image sensing chip are disposed on the bottom side of the carrier substrate and electrically connected to the carrier substrate. The first filter assembly corresponds to the first image sensing chip, and the first filter assembly includes a first support element disposed on the carrier substrate and a first filter element cooperating with the first support element. The second filter assembly corresponds to the second image sensing chip, and the second filter assembly includes a second support element disposed on the carrier substrate and a second filter element cooperating with the second support element. The first lens assembly corresponds to the first image sensing chip, and the first lens assembly includes a first lens holder disposed on the top side of the carrier substrate and a first optical lens carried by the first lens holder. The second lens assembly corresponds to the second image sensing chip, and the second lens assembly includes a second lens holder disposed on the top side of the carrier substrate and a second optical lens carried by the second lens holder. The first image sensing chip, the first filter assembly and the first lens assembly cooperate with each other to form a first image sensing module for capturing invisible light. The second image sensing chip, the second filter assembly and the second lens assembly cooperate with each other to form a second image sensing module for capturing visible light. The first support element is configured to carry the first filter element, so that all or a part of the first filter element is accommodated in the first through opening. The second support element is configured to carry the second filter element, so that all or a part of the second filter element is accommodated in the second through opening.

In order to solve the above-mentioned problems, yet another one of the technical aspects adopted by the present invention is to provide a portable electronic device using an image-capturing device. The image-capturing device includes a carrier substrate, a first image sensing chip, a first filter assembly and a first lens assembly. The carrier substrate has a top side, a bottom side, a first through opening and a second through opening, and the first through opening and the second through opening are connected between the top side and the bottom side. The first image sensing chip is disposed on the bottom side of the carrier substrate and electrically connected to the carrier substrate. The first filter assembly corresponds to the first image sensing chip, and the first filter assembly includes a first support element disposed on the carrier substrate and a first filter element cooperating with the first support element. The first lens assembly corresponds to the first image sensing chip, and the first lens assembly includes a first lens holder disposed on the top side of the carrier substrate and a first optical lens carried by the first lens holder. The first image sensing chip, the first filter assembly and the first lens assembly cooperate with each other to form a first image sensing module for capturing invisible light. The first support element is configured to carry the first filter element, so that all or a part of the first filter element is accommodated in the first through opening. When at least one first microparticle with a maximum particle size between 5 µm and 25 µm is located on the first filter element, a shortest distance between the first filter element and the first image sensing chip is between 30 µm and 200 µm, so that the first image sensing chip cannot capture a light spot generated due to blocking of the at least one first microparticle.

Therefore, in the image-capturing device provided by the present invention, by virtue of "the first image sensing chip and the second image sensing chip being disposed on the bottom side of the carrier substrate and electrically connected to the carrier substrate," "the first filter assembly including a first support element disposed on the carrier substrate and a first filter element cooperating with the first support element," "the second filter assembly including a second support element disposed on the carrier substrate and a second filter element cooperating with the second support element," "the first support element being configured to carry the first filter element so as to accommodate all or a part of the first filter element in the first through opening," and "the second support element being configured to carry the second filter element so as to accommodate all or a part of the second filter element in the second through opening," the image-capturing quality of the image-capturing device can be improved. More particularly, when at least one first microparticle with a maximum particle size between 5 µm and 25 µm is located on the first filter element, a shortest distance between the first filter element and the first image sensing chip is between 30 µm and 200 µm, so that the first image sensing chip cannot capture a light spot generated due to blocking of the at least one first microparticle. In addition, when at least one second microparticle with a maximum particle size between 5 µm and 25 µm is located on the second filter element, a shortest distance between the second filter element and the second image sensing chip is between 30 µm and 200 µm, so that the second image sensing chip cannot capture a light spot generated due to blocking of the at least one second microparticle.

Furthermore, in the image-capturing device provided by the present invention, by virtue of "placing at least one test microparticle with a maximum particle size between 5 µm and 25 µm on a test filter element," "adjusting a shortest distance from the test filter element to a test image sensor chip until the test image sensor chip cannot capture a light spot generated due to blocking of the at least one test microparticle, in order to obtain a reference data of the shortest distance between the test filter element and the test image sensor chip ranging from 30 µm to 200 µm," and "according to the reference data, placing a first image sensing chip, a second image sensing chip, a first filter assembly, a second filter assembly, a first lens assembly and a second lens assembly on a carrier substrate so as to define a shortest distance between the first filter element and the first image sensing chip ranging from 30 µm to 200 µm, and a shortest distance between the second filter element and the second image sensing chip ranging from 30 µm to 200 µm," the image-capturing quality of the image-capturing device can be improved. More particularly, when at least one first microparticle with a maximum particle size between 5 µm and 25 µm is located on the first filter element, a shortest distance between the first filter element and the first image sensing chip is between 30 µm and 200 µm, so that the first image sensing chip cannot capture a light spot generated due to blocking of the at least one first microparticle. In addition, when at least one second microparticle with a maximum particle size between 5 µm and 25 µm is located on the second filter element, a shortest distance between the second filter element and the second image sensing chip is between 30 µm and 200 µm, so that the second image sensing chip cannot capture a light spot generated due to blocking of the at least one second microparticle.

Furthermore, in the portable electronic device using the image-capturing device provided by the present invention, by virtue of "the first image sensing chip and the second image sensing chip being disposed on the bottom side of the carrier substrate and electrically connected to the carrier substrate," "the first filter assembly including a first support element disposed on the carrier substrate and a first filter element cooperating with the first support element," and "the first support element being configured to carry the first filter element so as to accommodate all or a part of the first filter element in the first through opening," the image-capturing quality of the image-capturing device can be improved. More particularly, when at least one first microparticle with a maximum particle size between 5 µm and 25 µm is located on the first filter element, a shortest distance between the first filter element and the first image sensing chip is between 30 µm and 200 µm, so that the first image sensing chip cannot capture a light spot generated due to blocking of the at least one first microparticle.

These and other aspects of the present invention will become apparent from the following description of the embodiment taken in conjunction with the following drawings and their captions, although variations and modifications therein may be affected without departing from the spirit and scope of the novel concepts of the invention.

### BRIEF DESCRIPTION OF THE DRAWINGS

The described embodiments may be better understood by reference to the following description and the accompanying drawings, in which:
FIG. 1 is a schematic top view of the image-capturing device provided by the first to third embodiments of the present invention;
FIG. 2 is a schematic front view of the image-capturing device provided by the first to third embodiments of the present invention;
FIG. 3 is a schematic perspective view of the image-capturing device provided by the first embodiment of the present invention;
FIG. 4 is a schematic perspective view of the portable electronic device provided by the first embodiment of the present invention;
FIG. 5 is a schematic view of the test microparticle, the test image sensing chip and the test filter element in the assembly method of the image-capturing device according to the first embodiment of the present invention;
FIG. 6 is a schematic view of a first implementation of the first image sensing module or the second image sensing module of the image-capturing device provided by the first embodiment of the present invention;
FIG. 7 is a schematic view of a second implementation of the first image sensing module or the second image sensing module of the image-capturing device provided by the first embodiment of the present invention;
FIG. 8 is a schematic view of a third implementation of the first image sensing module or the second image sensing module of the image-capturing device provided by the first embodiment of the present invention;
FIG. 9 is a schematic view of a first implementation of the first image sensing module or the second image sensing module of the image-capturing device provided by the second embodiment of the present invention;
FIG. 10 is a schematic view of a second implementation of the first image sensing module or the second image sensing module of the image-capturing device provided by the second embodiment of the present invention;
FIG. 11 is a schematic view of a third implementation of the first image sensing module or the second image sensing module of the image-capturing device provided by the second embodiment of the present invention;
FIG. 12 is a schematic view of a first implementation of the first image sensing module or the second image sensing module of the image-capturing device provided by the third embodiment of the present invention;
FIG. 13 is a schematic view of a second implementation of the first image sensing module or the second image sensing module of the image-capturing device provided by the third embodiment of the present invention; and
FIG. 14 is a schematic view of a third implementation of the first image sensing module or the second image sensing module of the image-capturing device provided by the third embodiment of the present invention.

### DETAILED DESCRIPTION OF THE EXEMPLARY EMBODIMENTS

The present invention is more particularly described in the following examples that are intended as illustrative only since numerous modifications and variations therein will be apparent to those skilled in the art. Like numbers in the drawings indicate like components throughout the views. As used in the description herein and throughout the claims that follow, unless the context clearly dictates otherwise, the meaning of "a," "an" and "the" includes plural reference, and the meaning of "in" includes "in" and "on." Titles or subtitles can be used herein for the convenience of a reader, which shall have no influence on the scope of the present invention.

The terms used herein generally have their ordinary meanings in the art. In the case of conflict, the present document, including any definitions given herein, will prevail. The same thing can be expressed in more than one way. Alternative language and synonyms can be used for any term(s) discussed herein, and no special significance is to be placed upon whether a term is elaborated or discussed herein. A recital of one or more synonyms does not exclude the use of other synonyms. The use of examples anywhere in this specification including examples of any terms is illustrative only, and in no way limits the scope and meaning of the present invention or of any exemplified term. Likewise, the present invention is not limited to various embodiments given herein. Numbering terms such as "first," "second" or "third" can be used to describe various components, signals or the like, which are for distinguishing one component/signal from another one only, and are not intended to, nor should be construed to impose any substantive limitations on the components, signals or the like.

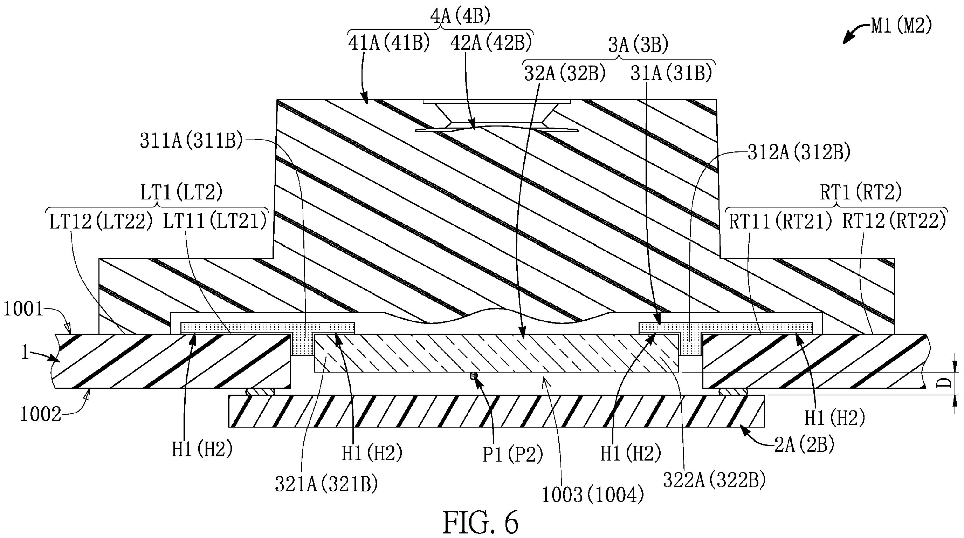

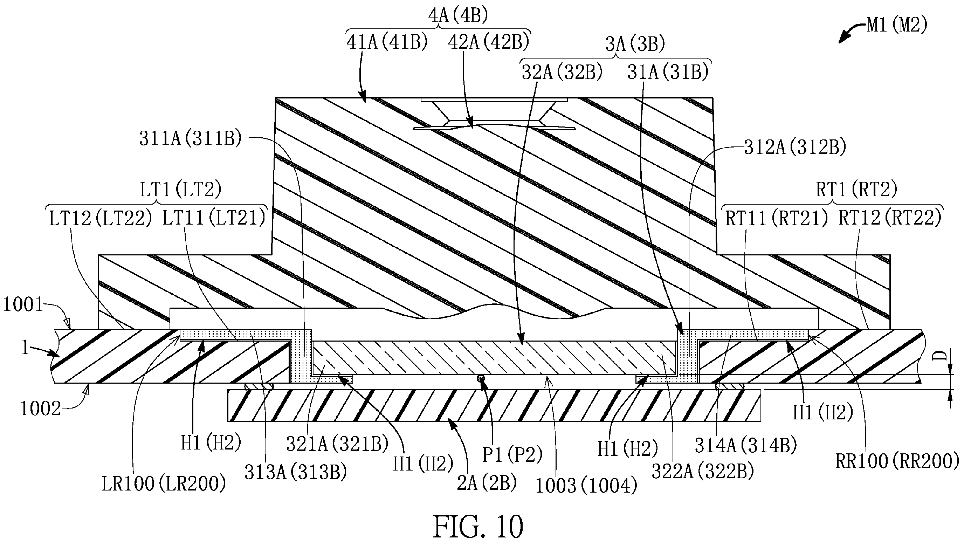

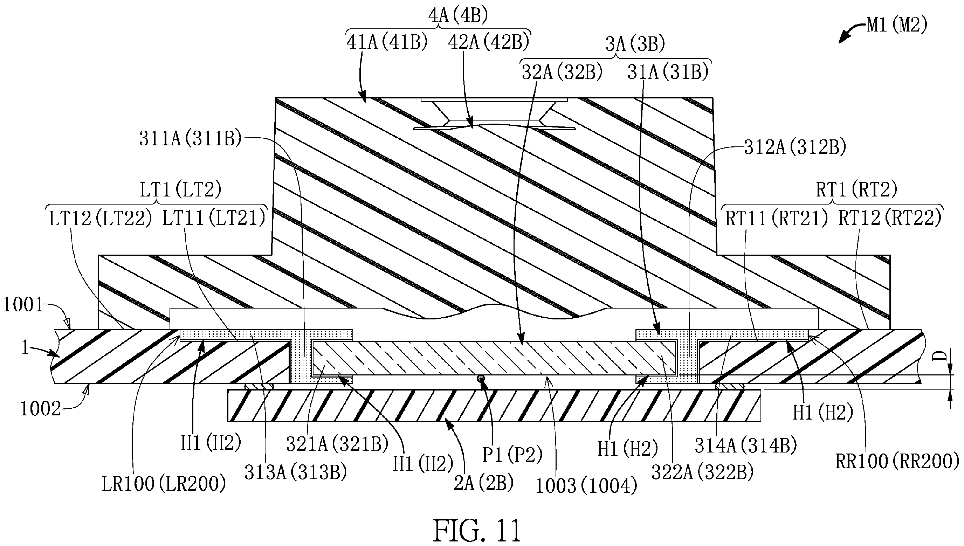

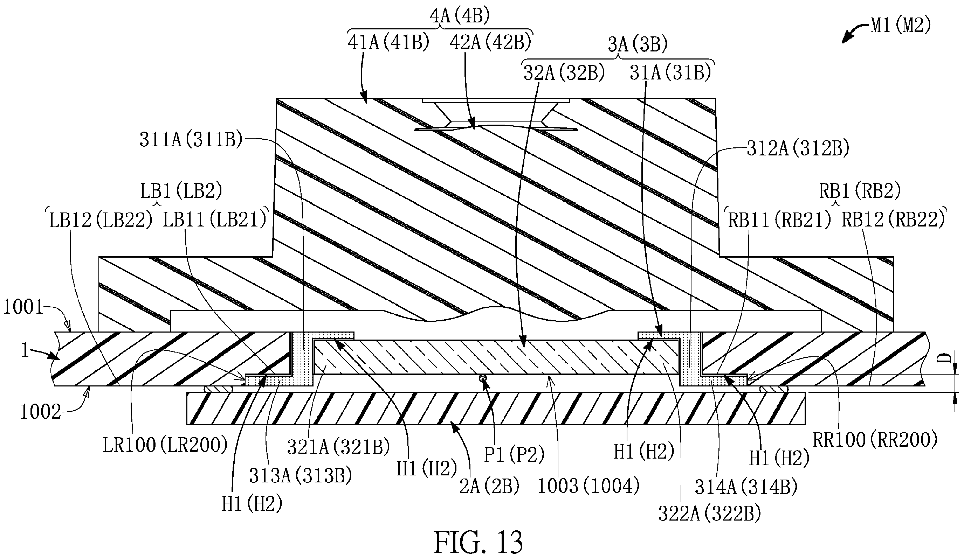

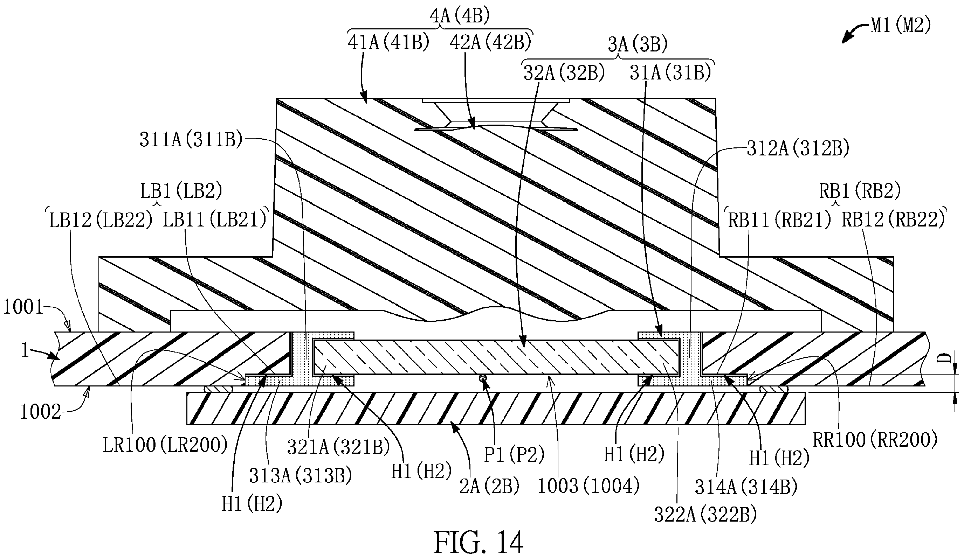

It should be noted that as shown in FIG. 6 to FIG. 14, the first image sensing module M1 and the second image sensing module M2 are disposed on different positions of the carrier substrate 1, and the first image sensing module M1 and the second image sensing module M2 can use the same or different sizes of optical elements. However, in order to simplify the description, the component symbols of both the first image sensing module M1 and the second image sensing module M2 are simultaneously shown in FIG. 6 to FIG. 14, in which the component symbols of the second image sensing module M2 are marked in brackets to facilitate the distinction.

### [First Embodiment]

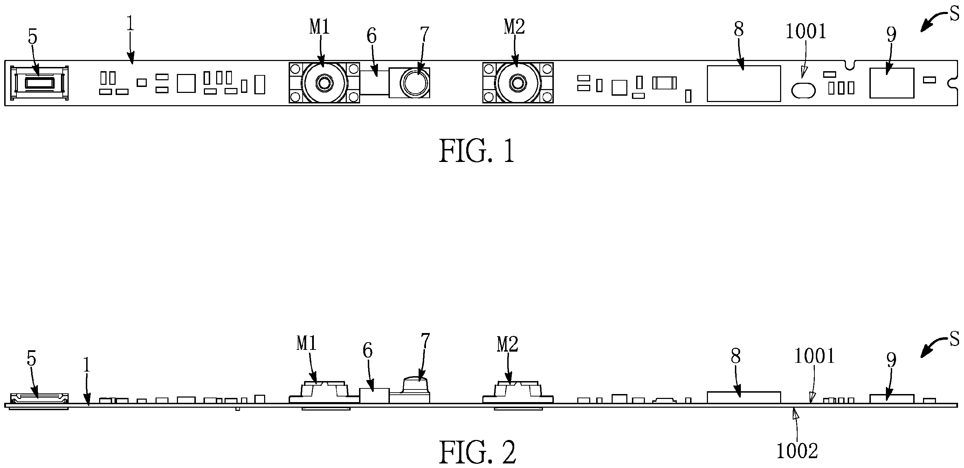

Referring to FIG. 1 to FIG. 8, a first embodiment of the present invention provides an image-capturing device S, which includes a carrier substrate 1, a first image sensing chip 2A, a second image sensing chip 2B, a first filter assembly 3A, a second filter assembly 3B, a first lens assembly 4A and a second lens assembly 4B.

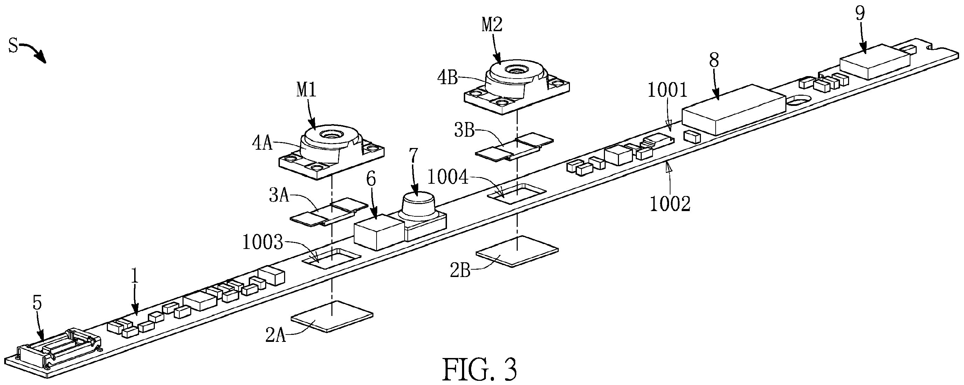

Firstly, referring to FIG. 2 and FIG. 3, the carrier substrate 1 has a top side 1001, a bottom side 1002, a first through opening 1003 (such as a first hollow hole) and a second through opening 1004 (such as a second hollow hole), and the first through opening 1003 and the second through opening 1004 are connected between the top side 1001 and the bottom side 1002. For example, the carrier substrate 1 can be an elongated circuit substrate or a circuit substrate of any shape.

Furthermore, referring to FIG. 2, FIG. 3 and FIG. 6, the first image sensing chip 2A and the second image sensing chip 2B are disposed on the bottom side 1002 of the carrier substrate 1 and electrically connected to the carrier substrate 1. For example, the first image sensing chip 2A can be an infrared photosensitive chip (using 720*640 resolution output), the first filter element 32A is an infrared filter, and the second image sensing chip 2B can be a visible light photosensitive chip (using 1980* 1280 resolution output). In addition, the first image sensing chip 2A can be electrically connected to the carrier substrate 1 through a plurality of first conductive materials (such as solder balls, solder paste or any conductor as shown in FIG. 6, but not labeled), and the second image sensing chip 2B can be electrically connected to the carrier substrate 1 through a plurality of second conductive materials (such as solder balls, solder paste or any conductor as shown in FIG. 6, but not labeled).

Moreover, referring to FIG. 2, FIG. 3 and FIG. 6, the first filter assembly 3A corresponds to the first image sensing chip 2A on the optical path, and the first filter assembly 3A includes a first support element 31A disposed on the carrier substrate 1 and a first filter element 32A cooperating with the first support element 31A. In addition, the second filter assembly 3B corresponds to the second image sensing chip 2B on the optical path, and the second filter assembly 3B includes a second support element 31B disposed on the carrier substrate 1 and a second filter element 32B cooperating with the second support element 31B. For example, the first filter element 32A can be an infrared filter (having a wavelength about 850 nm), and the second filter element 32B can be a visible light filter. In addition, a minimum thickness (such as a thickness between 0.05 mm and 0.08 mm) of the first support element 31A is smaller than a thickness (such as a thickness between 1 mm and 1.5 mm) of the first filter element 32A, and a minimum thickness (such as a thickness between 0.05 mm and 0.08 mm) of the second support element 31B is smaller than a thickness (such as a thickness between 1 mm and 1.5 mm) of the second filter element 32B.

More particularly, referring to FIG. 2, FIG. 3 and FIG. 6, the first support element 31A is only connected to the carrier substrate 1 and is not in contact with the first image sensing chip 2A, and the second support element 31B is only connected to the carrier substrate 1 and is not in contact with the second image sensing chip 2B. In addition, the first support element 31A is connected between the carrier substrate 1 and the first filter element 32A through a plurality of first adhesive layers H1, and the second support element 31B is connected between the carrier substrate 1 and the second filter element 32B through a plurality of second adhesive layers H2. For example, since the adhesive force of the first adhesive layer H1 used between the first support element 31A and the carrier substrate 1 can be greater than the adhesive force of the first adhesive layer H1 used between the first filter element 32A and the carrier substrate 1, the first filter assembly 3A can be more firmly adhered to the carrier substrate 1 through the use of the first support element 31A. In addition, since the adhesive force of the second adhesive layer H2 used between the second support element 31B and the carrier substrate 1 can be greater than the adhesive force of the second adhesive layer H2 used between the second filter element 32B and the carrier substrate 1, the second filter assembly 3B can be more firmly adhered to the carrier substrate 1 through the use of the second support element 31B.

Moreover, referring to FIG. 2, FIG. 3 and FIG. 6, the first lens assembly 4A corresponds to the first image sensing chip 2A on the optical path, and the first lens assembly 4A includes a first lens holder 41A disposed on the top side 1001 of the carrier substrate 1 and a first optical lens 42A that is carried by the first lens holder 41A. In addition, the second lens assembly 4B corresponds to the second image sensing chip 2B on the optical path, and the second lens assembly 4B includes a second lens holder 41B disposed on the top side 1001 of the carrier substrate 1 and a second optical lens 42B that is carried by the second lens holder 41B. For example, the first optical lens 42A can be an infrared lens (having a wavelength about 850 nm), and the second optical lens 42B can be a visible light lens. In addition, the first lens holder 41A downwardly contacts or abuts against the first support element 31A (not shown in figures), or the first lens holder 41A is separate from the first support element 31A (as shown in FIG.6), and the second lens holder 41B downwardly contacts or abuts against the second support element 31B (not shown in figures), or the second lens holder 41B is separate from the second support element 31B (as shown in FIG.6). It should be noted that the first image sensing chip 2A, the first filter assembly 3A and the first lens assembly 4A can cooperate with each other to form a first image sensing module M1 for capturing invisible light (for example, it can be used to realize functions such as face recognition unlocking and anti-peeping etc.), and the second image sensing chip 2B, the second filter assembly 3B and the second lens assembly 4B can cooperate with each other to form a second image sensing module M2 for capturing visible light (for example, it can be used to realize image or video capture function).

More particularly, referring to FIG. 3 and FIG. 6, the first support element 31A can be configured to carry the first filter element 32A, so that all (i.e., 100% as shown in FIG. 6) or a part (such as any positive integer percentage between 30% and 99%) of the first filter element 32A is accommodated in the first through opening 1003. In this way, the overlapping percentage (i.e., the overlapping ratio) of the first filter element 32A and the carrier substrate 1 in the thickness direction can be increased, thereby effectively reducing the overall thickness of the first image sensing module M1 (for example, the overall thickness of the first image sensing module M1 is not greater than 1.8 mm). In addition, the second support element 31B can be configured to carry the second filter element 32B, so that all (i.e., 100% as shown in FIG. 6) or a part (such as any positive integer percentage between 30% and 99%) of the second filter element 32B is accommodated in the second through opening 1004. In this way, the overlapping percentage (i.e., the overlapping ratio) of the second filter element 32B and the carrier substrate 1 in the thickness direction can be increased, thereby effectively reducing the overall thickness of the second image sensing module M2 (for example, the overall thickness of the second image sensing module M2 is not greater than 1.8 mm). It should be noted that an overall thickness of the second image sensing module M2 can be greater than, smaller than, or the same as an overall thickness of the first image sensing module M1. In addition, the carrier substrate 1 can also form a first recessed area (not shown) and a second recessed area (not shown) on the bottom side 1002, and the first image sensing chip 2A and the second image sensing chip 2B can be completely or partially accommodated in the first recessed area and the second recessed area of the carrier substrate 1, thereby increasing the overlapping percentage of the first image sensing chip 2A and the carrier substrate 1 in the thickness direction (i.e., reducing the overall thickness of the first image sensing module M1), and increasing the overlapping percentage of the second image sensing chip 2B and the carrier substrate 1 in the thickness direction (i.e., reducing the overall thickness of the second image sensing module M2).

Therefore, when at least one first microparticle P1 with a maximum particle size between 5 µm and 25 µm (for example, according to different environmental considerations, it can be any positive integer between 5 µm and 25 µm, or an interval defined by any two positive integers between 5 µm and 25 µm, such as between 5 µm and 15 µm, or between 15 µm and 25 µm) is located on the first filter element 32A (for example, on the upper or lower surface of the first filter element 32A), a shortest distance D between the first filter element 32A and the first image sensing chip 2A is between 30 µm and 200 µm (for example, according to different application product considerations, it can be any positive integer between 30 µm and 200 µm, or an interval defined by any two positive integers between 30 µm and 200 µm, such as between 30 µm and 80 µm, or between 80 µm and 130 µm, or between 130 µm and 200 µm), so that the first image sensing chip 2A cannot capture a light spot (or an image spot) generated due to blocking (or shielding) of the at least one first microparticle P1. That is to say, the at least one first microparticle P 1 with a maximum particle size between 5 µm and 25 µm can be separated from the first image sensing chip 2A by a sufficient distance due to the setting of the shortest distance D, so that the first image sensing chip 2A will not capture the image of the at least one first microparticle P1, and the at least one first microparticle P1 will not be imaged on the first image sensing chip 2A, thereby improving the image-capturing quality of the first image sensing chip 2A. In addition, when at least one second microparticle P2 with a maximum particle size between 5 µm and 25 µm (for example, according to different environmental considerations, it can be any positive integer between 5 µm and 25 µm, or an interval defined by any two positive integers between 5 µm and 25 µm, such as between 5 µm and 15 µm, or between 15 µm and 25 µm) is located on the second filter element 32B (for example, on the upper or lower surface of the second filter element 32A), a shortest distance D between the second filter element 32B and the second image sensing chip 2B is between 30 µm and 200 µm (for example, according to different application product considerations, it can be any positive integer between 30 µm and 200 µm, or an interval defined by any two positive integers between 30 µm and 200 µm, such as between 30 µm and 80 µm, or between 80 µm and 130 µm, or between 130 µm and 200 µm), so that the second image sensing chip 2B cannot capture a light spot (or an image spot) generated due to blocking (or shielding) of the at least one second microparticle P2. That is to say, the at least one second microparticle P2 with a maximum particle size between 5 µm and 25 µm can be separated from the second image sensing chip 2B by a sufficient distance due to the setting of the shortest distance D, so that the second image sensing chip 2B will not capture the image of the at least one second microparticle P2, and the at least one second microparticle P2 will not be imaged on the second image sensing chip 2B, thereby improving the image-capturing quality of the second image sensing chip 2B.

For example, referring to FIG. 1 to FIG. 3, the image-capturing device S provided by the first embodiment of the present invention further includes an electrical connector 5, an ambient light sensor 6 (such as an infrared light sensing chip with a wavelength of about 850 nm), an infrared generator 7 (such as an infrared LED lamp with a wavelength of about 850 nm), an image processor 8 (such as an ISP chip) and a sound receiver 9 (such as a microphone), and the electrical connector 5, the ambient light sensor 6, the infrared generator 7, the image processor 8 and the sound receiver 9 are disposed on the top side 1001 of the carrier substrate 1 and electrically connected to the carrier substrate 1. More particularly, the electrical connector 5, the first image sensing module M1, the ambient light sensor 6, the infrared generator 7, the second image sensing module M2, the image processor 8 and the sound receiver 9 can be sequentially disposed on the carrier substrate 1, so that the present invention can provide an image-capturing device S with high density arrangement and small overall thickness, and can support the Window Hello function supported by the Windows 11 system released by Microsoft. It is worth mentioning that the ambient light sensor 6 and the infrared generator 7 can be closer to the first image sensing module M1 than the second image sensing module M2, and the first image sensing module M1 and the second image sensing module M2 are arranged on the same carrier substrate 1 to form a dual camera module.

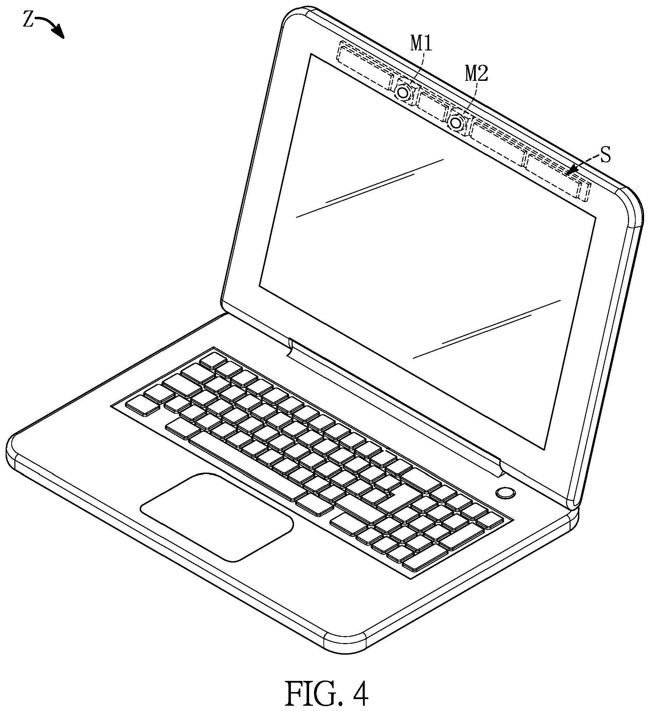

More particularly, referring to FIG. 3 and FIG. 4, the first embodiment of the present invention further includes a portable electronic device Z using an image-capturing device S at least including the first image sensing module M1 and the second image sensing module M2. For example, the portable electronic device Z can be a notebook computer, a tablet computer or a smart mobile phone.

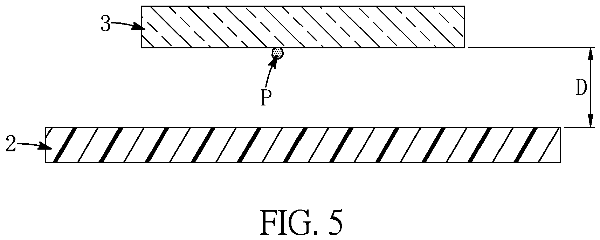

More particularly, referring to FIG. 3, FIG. 5 and FIG. 6, the first embodiment of the present invention further includes a method of assembling an image-capturing device S, which includes: firstly, as shown in FIG. 5, placing at least one test microparticle P (such as a physical or virtual microparticle) with a maximum particle size between 5 µm and 25 µm on a test filter element 3 (such as a physical or virtual filter element); next, as shown in FIG. 5, adjusting a shortest distance D from the test filter element 3 to a test image sensor chip 2 until the test image sensor chip 2 cannot capture a light spot (or an image spot) generated due to blocking of the at least one test microparticle P, in order to obtain a reference data of the shortest distance D between the test filter element 3 and the test image sensor chip 2 ranging from 30 µm to 200 µm; and then as shown in FIG. 6, according to the reference data, placing a first image sensing chip 2A, a second image sensing chip 2B, a first filter assembly 3A, a second filter assembly 3B, a first lens assembly 4A and a second lens assembly 4B on a carrier substrate 1 so as to define a shortest distance D between the first filter element 32A and the first image sensing chip 2A ranging from 30 µm to 200 µm, and a shortest distance D between the second filter element 32B and the second image sensing chip 2B ranging from 30 µm to 200 µm. For example, the method of assembling the image-capturing device S provided by the first embodiment of the present invention further includes: placing an electrical connector 5, an ambient light sensor 6, an infrared generator 7, an image processor 8 and a sound receiver 9 on the top side 1001 of the carrier substrate 1 to electrically connect to the carrier substrate 1.

For example, referring to FIG. 3 and FIG. 6, the following content is described with the first implementation of the first image sensing module M1. The top side 1001 of the carrier substrate 1 has a first left top carrier surface LT1 and a first right top carrier surface RT1, the first left top carrier surface LT1 has a first inner surface LT 11 and a first outer surface LT12 that are flush with each other, and the first right top carrier surface RT1 has a first inner surface RT11 and a first outer surface RT12 that are flush with each other. More particularly, the first inner surface LT11 of the first left top carrier surface LT1 and the first inner surface RT11 of the first right top carrier surface RT1 can be configured to carry the first support element 31A (for example, the first support element 31A may be a single member, or a left and a right member separate from each other), and the first outer surface LT12 of the first left top carrier surface LT1 and the first outer surface RT12 of the first right top carrier surface RT1 can be configured to carry the first lens holder 41A. It should be noted that the first filter element 32A has a first left portion 321A and a first right portion 322A corresponding to the first left portion 321A, an upper surface of the first left portion 321A of the first filter element 32A and all or a part of a lateral surface of the first left portion 321A of the first filter element 32A are covered by a first left inner portion 311A of the first support element 31A, and an upper surface of the first right portion 322A of the first filter element 32A and all or a part of a lateral surface of the first right portion 322A of the first filter element 32A are covered by a first right inner portion 312A of the first support element 31A.

For example, referring to FIG. 3 and FIG. 6, the following content is described with the first implementation of the second image sensing module M2. The top side 1001 of the carrier substrate 1 has a second left top carrier surface LT2 and a second right top carrier surface RT2, the second left top carrier surface LT2 has a second inner surface LT21 and a second outer surface LT22 that are flush with each other, and the second right top carrier surface RT2 has a second inner surface RT21 and a second outer surface RT22 that are flush with each other. More particularly, the second inner surface LT21 of the second left top carrier surface LT2 and the second inner surface RT21 of the second right top carrier surface RT2 can be configured to carry the second support element 31B (for example, the second support element 31B may be a single member, or a left and a right member separate from each other), and the second outer surface LT22 of the second left top carrier surface LT2 and the second outer surface RT22 of the second right top carrier surface RT2 can be configured to carry the second lens holder 41B. It should be noted that the second filter element 32B has a second left portion 321B and a second right portion 322B corresponding to the second left portion 321B, an upper surface of the second left portion 321B of the second filter element 32B and all or a part of a lateral surface of the second left portion 321B of the second filter element 32B are covered by a second left inner portion 311B of the second support element 31B, and an upper surface of the second right portion 322B of the second filter element 32B and all or a part of a lateral surface of the second right portion 322B of the second filter element 32B are covered by a second right inner portion 312B of the second support element 31B.

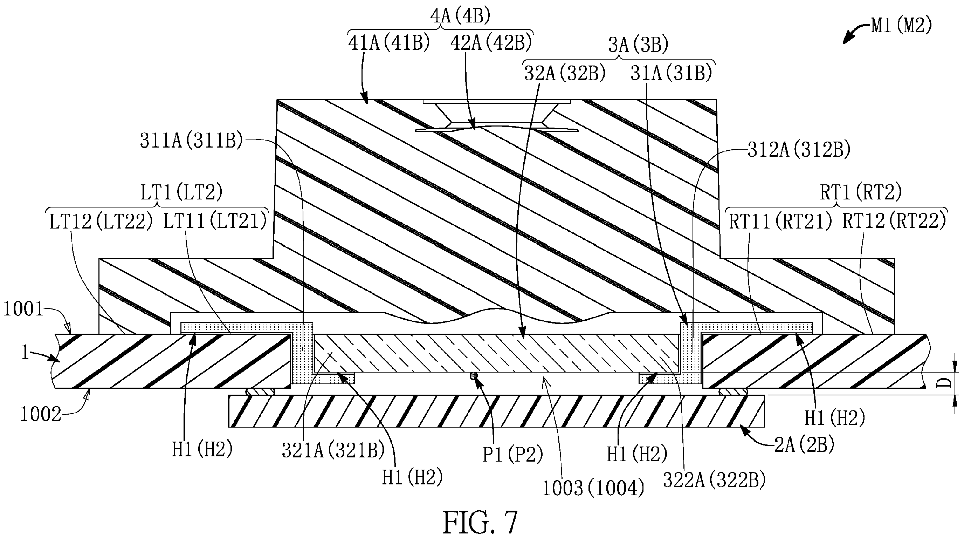

For example, referring to FIG. 3 and FIG. 7, the following content is described with the second implementation of the first image sensing module M1. A lower surface of the first left portion 321A of the first filter element 32A and all or a part of a lateral surface of the first left portion 321A of the first filter element 32A are covered by a first left inner portion 311A of the first support element 31A, and a lower surface of the first right portion 322A of the first filter element 32A and all or a part of a lateral surface of the first right portion 322A of the first filter element 32A are covered by a first right inner portion 312A of the first support element 31A. In addition, the following content is described with the second implementation of the second image sensing module M2. A lower surface of the second left portion 321B of the second filter element 32B and all or a part of a lateral surface of the second left portion 321B of the second filter element 32B are covered by a second left inner portion 311B of the second support element 31B, and a lower surface of the second right portion 322B of the second filter element 32B and all or a part of a lateral surface of the second right portion 322B of the second filter element 32B are covered by a second right inner portion 312B of the second support element 31B. Thereby, the structural stability and structural strength of the first filter assembly 3A and the second filter assembly 3B can be effectively improved, so that the first filter element 32A does not easily detach from the first support element 31A, and the second filter element 32B does not easily detach from second support element 31B.

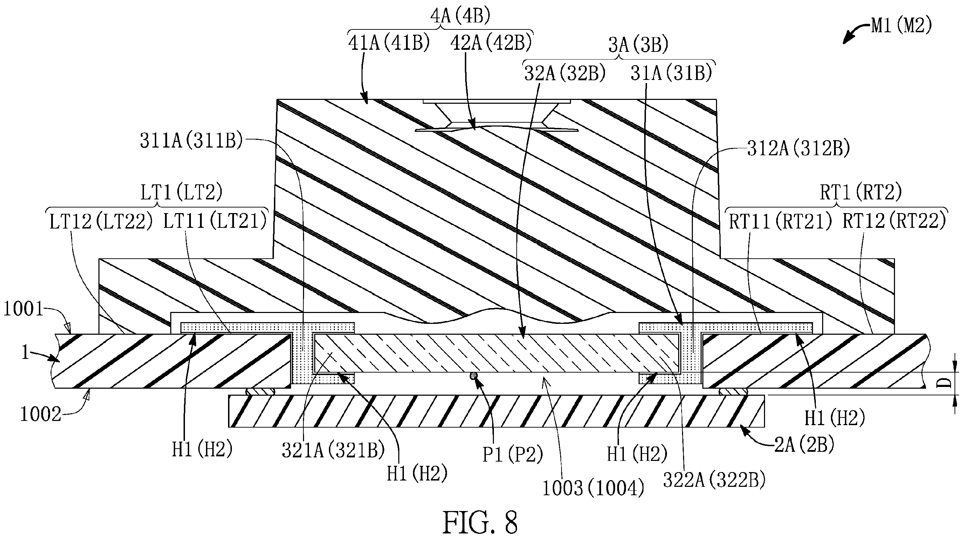

For example, referring to FIG. 3 and FIG. 8, the following content is described with the third implementation of the first image sensing module M1. An upper surface, a lower surface and a lateral surface of the first left portion 321A of the first filter element 32A are covered by a first left inner portion 311A of the first support element 31A, an upper surface, a lower surface and a lateral surface of the first right portion 322A of the first filter element 32A are covered by a first right inner portion 312A of the first support element 31A. In addition, the following content is described with the third implementation of the second image sensing module M2. An upper surface, a lower surface and a lateral surface of the second left portion 321B of the second filter element 32B are covered by a second left inner portion 311B of the second support element 31B, and an upper surface, a lower surface and a lateral surface of the second right portion 322B of the second filter element 32B are covered by a second right inner portion 312B of the second support element 31B. Thereby, the structural stability and structural strength of the first filter assembly 3A and the second filter assembly 3B can be effectively improved, so that the first filter element 32A does not easily detach from the first support element 31A, and the second filter element 32B does not easily detach from second support element 31B.

### [Second Embodiment]

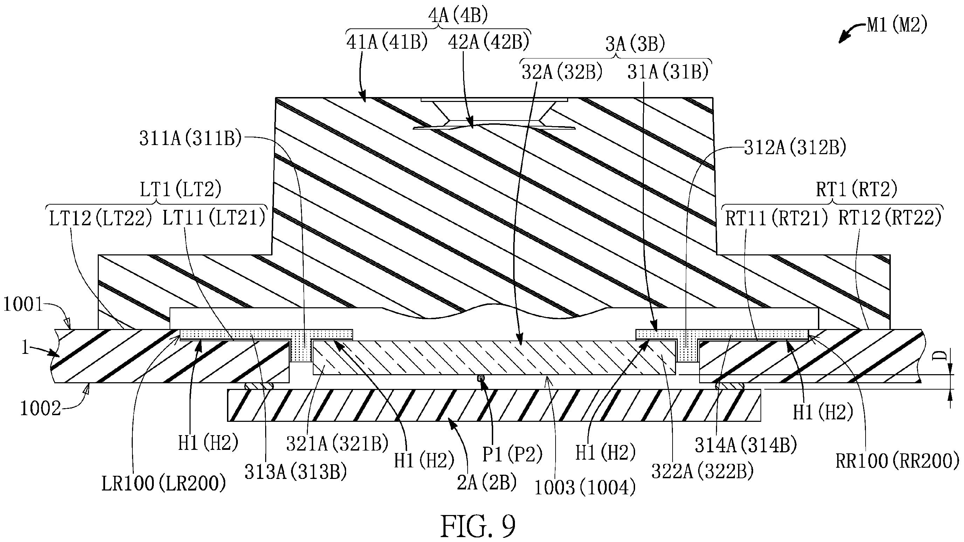

Referring to FIG. 1, FIG. 2 and FIG. 9 to FIG. 11, a second embodiment of the present invention provides an image-capturing device S. From the comparison of FIG. 9 to FIG. 11 with FIG. 6 to FIG. 8 respectively, the main difference between the second embodiment and the first embodiment is as follows.

Referring to FIG. 9 to FIG. 11, in the second embodiment, the following content is described with the first, second and third implementations of the first image sensing module M1. The top side 1001 of the carrier substrate 1 has a first left top carrier surface LT1 and a first right top carrier surface RT1, the first left top carrier surface LT1 has a first inner surface LT11 and a first outer surface LT12 that both have a height difference, and the first right top carrier surface RT1 has a first inner surface RT11 and a first outer surface RT12 that both have a height difference. More particularly, the first inner surface LT11 and the first outer surface LT12 of the first left top carrier surface LT1 have a height difference, and the first inner surface RT11 and the first outer surface RT12 of the first right top carrier surface RT1 have a height difference, so that the carrier substrate 1 can provide a first left recessed space LR100 and a first right recessed space RR100 for respectively accommodating a first left outer portion 313A and a first right outer portion 314A of the first support element 31A, thereby reducing the shortest distance D between the first filter element 32A and the first image sensing chip 2A (that is to say, the shortest distance D shown in FIG. 9 to FIG. 11 can be smaller than the shortest distance D shown in FIG. 6 to FIG. 8). It should be noted that, according to different requirements, both the first left recessed space LR100 and the first right recessed space RR100 can be separate from each other without communicating with each other, or connected and communicated with each other.

Referring to FIG. 9 to FIG. 11, in the second embodiment, the following content is described with the first, second and third implementations of the second image sensing module M2. The top side 1001 of the carrier substrate 1 has a second left top carrier surface LT2 and a second right top carrier surface RT2, the second left top carrier surface LT2 has a second inner surface LT21 and a second outer surface LT22 that both have a height difference, and the second right top carrier surface RT2 has a second inner surface RT21 and a second outer surface RT22 that both have a height difference. More particularly, the second inner surface LT21 and the second outer surface LT22 of the second left top carrier surface LT2 have a height difference, and the second inner surface RT21 and the second outer surface RT22 of the second right top carrier surface RT2 have a height difference, so that the carrier substrate 1 can provide a second left recessed space LR200 and a second right recessed space RR200 for respectively accommodating a second left outer portion 313B and a second right outer portion 314B of the second support element 31B, thereby reducing the shortest distance D between the second filter element 32B and the second image sensing chip 2B (that is to say, the shortest distance D shown in FIG. 9 to FIG. 11 can be smaller than the shortest distance D shown in FIG. 6 to FIG. 8). It should be noted that, according to different requirements, both the second left recessed space LR200 and the second right recessed space RR200 can be separate from each other without communicating with each other, or connected and communicated with each other.

### [Third Embodiment]

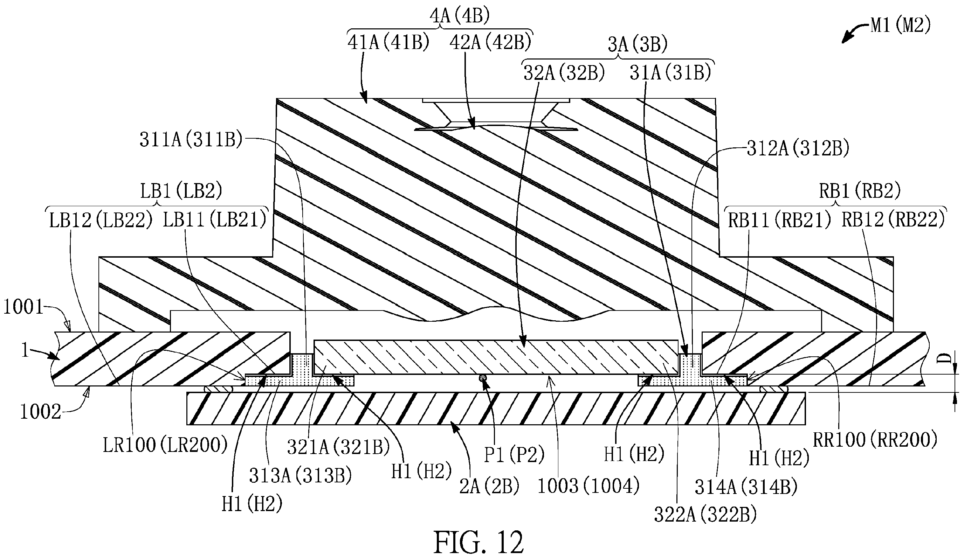

Referring to FIG. 1, FIG. 2 and FIG. 12 to FIG. 14, a third embodiment of the present invention provides an image-capturing device S. From the comparison of FIG. 12 to FIG. 14 with FIG. 6 to FIG. 8 respectively, the main difference between the third embodiment and the first embodiment is as follows.

Referring to FIG. 12 to FIG. 14, in the third embodiment, the following content is described with the first, second and third implementations of the first image sensing module M1. The bottom side 1002 of the carrier substrate 1 has a first left bottom carrier surface LB1 and a first right bottom carrier surface RB1, the first left bottom carrier surface LB 1 has a first inner surface LB 11 and a first outer surface LB12 that both have a height difference, and the first right bottom carrier surface RB1 has a first inner surface RB 11 and a first outer surface RB 12 that both have a height difference. In addition, the first inner surface LB 11 of the first left bottom carrier surface LB 1 and the first inner surface RB11 of the first right bottom carrier surface RB1 can be configured to carry the first support element 31A, and the first outer surface LB12 of the first left bottom carrier surface LB1 and the first outer surface RB12 of the first right bottom carrier surface RB 1 can be configured to carry the first image sensing chip 2A. More particularly, the first inner surface LB11 and the first outer surface LB12 of the first left bottom carrier surface LB 1 have a height difference, and the first inner surface RB11 and the first outer surface RB12 of the first right bottom carrier surface RB 1 have a height difference, so that the carrier substrate 1 can provide a first left recessed space LR100 and a first right recessed space RR100 for respectively accommodating a first left outer portion 313A and a first right outer portion 314A of the first support element 31A, thereby reducing the shortest distance D between the first filter element 32A and the first image sensing chip 2A (that is to say, the shortest distance D shown in FIG. 12 to FIG. 14 can be smaller than the shortest distance D shown in FIG. 6 to FIG. 8). It should be noted that, according to different requirements, both the first left recessed space LR100 and the first right recessed space RR100 can be separate from each other without communicating with each other, or connected and communicated with each other.

Referring to FIG. 12 to FIG. 14, in the third embodiment, the following content is described with the first, second and third implementations of the second image sensing module M2. The bottom side 1002 of the carrier substrate 1 has a second left bottom carrier surface LB2 and a second right bottom carrier surface RB2, the second left bottom carrier surface LB2 has a second inner surface LB21 and a second outer surface LB22 that both have a height difference, and the second right bottom carrier surface RB2 has a second inner surface RB21 and a second outer surface RB22 that both have a height difference. In addition, the second inner surface LB21 of the second left bottom carrier surface LB2 and the second inner surface RB21 of the second right bottom carrier surface RB2 can be configured to carry the second support element 31B, and the second outer surface LB22 of the second left bottom carrier surface LB2 and the second outer surface RB22 of the second right bottom carrier surface RB2 can be configured to carry the second image sensing chip 2B. More particularly, the second inner surface LB21 and the second outer surface LB22 of the second left bottom carrier surface LB2 have a height difference, and the second inner surface RB21 and the second outer surface RB22 of the second right bottom carrier surface RB2 have a height difference, so that the carrier substrate 1 can provide a second left recessed space LR200 and a second right recessed space RR200 for respectively accommodating a second left outer portion 313B and a second right outer portion 314B of the second support element 31B, thereby reducing the shortest distance D between the second filter element 32B and the second image sensing chip 2B (that is to say, the shortest distance D shown in FIG. 12 to FIG. 14 can be smaller than the shortest distance D shown in FIG. 6 to FIG. 8). It should be noted that, according to different requirements, both the second left recessed space LR200 and the second right recessed space RR200 can be separate from each other without communicating with each other, or connected and communicated with each other.

### [Beneficial Effects of the Embodiments]

In conclusion, in the image-capturing device S provided by the present invention, by virtue of "the first image sensing chip 2A and the second image sensing chip 2B being disposed on the bottom side 1002 of the carrier substrate 1 and electrically connected to the carrier substrate 1," "the first filter assembly 3A including a first support element 31A disposed on the carrier substrate 1 and a first filter element 32A cooperating with the first support element 31A," "the second filter assembly 3B including a second support element 31B disposed on the carrier substrate 1 and a second filter element 32B cooperating with the second support element 31B," "the first support element 31A being configured to carry the first filter element 32A so as to accommodate all or a part of the first filter element 32A in the first through opening 1003," and "the second support element 31B being configured to carry the second filter element 32B so as to accommodate all or a part of the second filter element 32B in the second through opening 1004," the image-capturing quality of the image-capturing device S can be improved. More particularly, when at least one first microparticle P1 with a maximum particle size between 5 µm and 25 µm is located on the first filter element 32A, a shortest distance D between the first filter element 32A and the first image sensing chip 2A is between 30 µm and 200 µm, so that the first image sensing chip 2A cannot capture a light spot generated due to blocking of the at least one first microparticle P1. In addition, when at least one second microparticle P2 with a maximum particle size between 5 µm and 25 µm is located on the second filter element 32B, a shortest distance D between the second filter element 32B and the second image sensing chip 2B is between 30 µm and 200 µm, so that the second image sensing chip 2B cannot capture a light spot generated due to blocking of the at least one second microparticle P2.

Furthermore, in the image-capturing device S provided by the present invention, by virtue of "placing at least one test microparticle with a maximum particle size between 5 µm and 25 µm on a test filter element," "adjusting a shortest distance D from the test filter element to a test image sensor chip until the test image sensor chip cannot capture a light spot generated due to blocking of the at least one test microparticle, in order to obtain a reference data of the shortest distance D between the test filter element and the test image sensor chip ranging from 30 µm to 200 µm," and "according to the reference data, placing a first image sensing chip 2A, a second image sensing chip 2B, a first filter assembly 3A, a second filter assembly 3B, a first lens assembly 4A and a second lens assembly 4B on a carrier substrate 1 so as to define a shortest distance D between the first filter element 32A and the first image sensing chip 2A ranging from 30 µm to 200 µm, and a shortest distance D between the second filter element 32B and the second image sensing chip 2B ranging from 30 µm to 200 µm," the image-capturing quality of the image-capturing device S can be improved. More particularly, when at least one first microparticle P1 with a maximum particle size between 5 µm and 25 µm is located on the first filter element 32A, a shortest distance D between the first filter element 32A and the first image sensing chip 2A is between 30 µm and 200 µm, so that the first image sensing chip 2A cannot capture a light spot generated due to blocking of the at least one first microparticle P1. In addition, when at least one second microparticle P2 with a maximum particle size between 5 µm and 25 µm is located on the second filter element 32B, a shortest distance D between the second filter element 32B and the second image sensing chip 2B is between 30 µm and 200 µm, so that the second image sensing chip 2B cannot capture a light spot generated due to blocking of the at least one second microparticle P2.

Furthermore, in the portable electronic device using the image-capturing device S provided by the present invention, by virtue of "the first image sensing chip 2A and the second image sensing chip 2B being disposed on the bottom side 1002 of the carrier substrate 1 and electrically connected to the carrier substrate 1," "the first filter assembly 3A including a first support element 31A disposed on the carrier substrate 1 and a first filter element 32A cooperating with the first support element 31A," and "the first support element 31A being configured to carry the first filter element 32A so as to accommodate all or a part of the first filter element 32A in the first through opening 1003," the image-capturing quality of the image-capturing device S can be improved. More particularly, when at least one first microparticle P1 with a maximum particle size between 5 µm and 25 µm is located on the first filter element 32A, a shortest distance D between the first filter element 32A and the first image sensing chip 2A is between 30 µm and 200 µm, so that the first image sensing chip 2A cannot capture a light spot generated due to blocking of the at least one first microparticle P1.

The foregoing description of the exemplary embodiments of the invention has been presented only for the purposes of illustration and description and is not intended to be exhaustive or to limit the invention to the precise forms disclosed. Many modifications and variations are possible in light of the above teaching.

The embodiments were chosen and described in order to explain the principles of the invention and their practical application so as to enable others skilled in the art to utilize the invention and various embodiments and with various modifications as are suited to the particular use contemplated. Alternative embodiments will become apparent to those skilled in the art to which the present invention pertains without departing from its spirit and scope.

## Claims

1. An image-capturing device (S), **characterized by** comprising:
a carrier substrate (1) having a top side (1001), a bottom side (1002), a first through opening (1003) and a second through opening (1004), wherein the first through opening (1003) and the second through opening (1004) are connected between the top side (1001) and the bottom side (1002);
a first image sensing chip (2A) disposed on the bottom side (1002) of the carrier substrate (1) and electrically connected to the carrier substrate (1);
a second image sensing chip (2B) disposed on the bottom side (1002) of the carrier substrate (1) and electrically connected to the carrier substrate (1);
a first filter assembly (3A) corresponding to the first image sensing chip (2A), wherein the first filter assembly (3A) includes a first support element (31A) disposed on the carrier substrate (1) and a first filter element (32A) cooperating with the first support element (31A);
a second filter assembly (3B) corresponding to the second image sensing chip (2B), wherein the second filter assembly (3B) includes a second support element (31B) disposed on the carrier substrate (1) and a second filter element (32B) cooperating with the second support element (31B);
a first lens assembly (4A) corresponding to the first image sensing chip (2A), wherein the first lens assembly (4A) includes a first lens holder (41A) disposed on the top side (1001) of the carrier substrate (1) and a first optical lens (42A) carried by the first lens holder (41A); and
a second lens assembly (4B) corresponding to the second image sensing chip (2B), wherein the second lens assembly (4B) includes a second lens holder (41B) disposed on the top side (1001) of the carrier substrate (1) and a second optical lens (42B) carried by the second lens holder (41B);
wherein the first image sensing chip (2A), the first filter assembly (3A) and the first lens assembly (4A) cooperate with each other to form a first image sensing module (M1) for capturing invisible light;
wherein the second image sensing chip (2B), the second filter assembly (3B) and the second lens assembly (4B) cooperate with each other to form a second image sensing module (M2) for capturing visible light;
wherein the first support element (31A) is configured to carry the first filter element (32A), so that all or a part of the first filter element (32A) is accommodated in the first through opening (1003);
wherein the second support element (31B) is configured to carry the second filter element (32B), so that all or a part of the second filter element (32B) is accommodated in the second through opening (1004);
wherein, when at least one first microparticle (P1) with a maximum particle size between 5 µm and 25 µm is located on the first filter element (32A), a shortest distance (D) between the first filter element (32A) and the first image sensing chip (2A) is between 30 µm and 200 µm, so that the first image sensing chip (2A) cannot capture a light spot generated due to blocking of the at least one first microparticle (P 1);
wherein, when at least one second microparticle (P2) with a maximum particle size between 5 µm and 25 µm is located on the second filter element (32B), a shortest distance (D) between the second filter element (32B) and the second image sensing chip (2B) is between 30 µm and 200 µm, so that the second image sensing chip (2B) cannot capture a light spot generated due to blocking of the at least one second microparticle (P2).

2. The image-capturing device (S) according to claim 1, further comprising:
an electrical connector (5) disposed on the top side (1001) of the carrier substrate (1) and electrically connected to the carrier substrate (1);
an ambient light sensor (6) disposed on the top side (1001) of the carrier substrate (1) and electrically connected to the carrier substrate (1);
an infrared generator (7) disposed on the top side (1001) of the carrier substrate (1) and electrically connected to the carrier substrate (1);
an image processor (8) disposed on the top side (1001) of the carrier substrate (1) and electrically connected to the carrier substrate (1); and
a sound receiver (9) disposed on the top side (1001) of the carrier substrate (1) and electrically connected to the carrier substrate (1);
wherein the electrical connector (5), the first image sensing module (M1), the ambient light sensor (6), the infrared generator (7), the second image sensing module (M2), the image processor (8) and the sound receiver (9) are sequentially disposed on the carrier substrate (1), and the ambient light sensor (6) and the infrared generator (7) are closer to the first image sensing module (M1) than the second image sensing module (M2);
wherein the first image sensing chip (2A) is electrically connected to the carrier substrate (1) through a plurality of first conductive materials, and the second image sensing chip (2B) is electrically connected to the carrier substrate (1) through a plurality of second conductive materials;
wherein the first image sensing chip (2A) is an infrared photosensitive chip, the first filter element (32A) is an infrared filter, and the first optical lens (42A) is an infrared lens;
wherein the second image sensing chip (2B) is a visible light photosensitive chip, the second filter element (32B) is a visible light filter, and the second optical lens (42B) is a visible light lens;
wherein a minimum thickness of the first support element (31A) is smaller than a thickness of the first filter element (32A), the minimum thickness of the first support element (31A) is between 0.05 mm and 0.08 mm, and the thickness of the first filter element (32A) is between 1 mm and 1.5 mm;
wherein a minimum thickness of the second support element (31B) is smaller than a thickness of the second filter element (32B), the minimum thickness of the second support element (31B) is between 0.05 mm and 0.08 mm, and the thickness of the second filter element (32B) is between 1 mm and 1.5 mm;
wherein an overall thickness of the second image sensing module (M2) is greater than an overall thickness of the first image sensing module (M1), and the overall thickness of the first image sensing module (M1) and the overall thickness of the second image sensing module (M2) are not greater than 1.8 mm;
wherein the first support element (31A) is only connected to the carrier substrate (1) and is not in contact with the first image sensing chip (2A), and the second support element (31B) is only connected to the carrier substrate (1) and is not in contact with the second image sensing chip (2B);
wherein the first support element (31A) is connected between the carrier substrate (1) and the first filter element (32A) through a plurality of first adhesive layers (H1), and the second support element (31B) is connected between the carrier substrate (1) and the second filter element (32B) through a plurality of second adhesive layers (H2);
wherein the first lens holder (41A) downwardly contacts the first support element (31A) or is separate from the first support element (31A), and the second lens holder (41B) downwardly contacts the second support element (31B) or is separate from the second support element (31B).

3. The image-capturing device (S) according to claim 1,
wherein the top side (1001) of the carrier substrate (1) has a first left top carrier surface (LT1) and a first right top carrier surface (RT1), the first left top carrier surface (LT1) has a first inner surface (LT11) and a first outer surface (LT12) that are flush with each other or have a height difference, and the first right top carrier surface (RT1) has a first inner surface (RT 11) and a first outer surface (RT12) that are flush with each other or have a height difference;
wherein the first inner surface (LT11) of the first left top carrier surface (LT1) and the first inner surface (RT 11) of the first right top carrier surface (RT1) are configured to carry the first support element (31A), and the first outer surface (LT12) of the first left top carrier surface (LT1) and the first outer surface (RT12) of the first right top carrier surface (RT1) are configured to carry the first lens holder (41A);
wherein, when the first inner surface (LT11) and the first outer surface (LT12) of the first left top carrier surface (LT1) have a height difference, and the first inner surface (RT 11) and the first outer surface (RT12) of the first right top carrier surface (RT1) have a height difference, the carrier substrate (1) provides a first left recessed space (LR100) and a first right recessed space (RR100) for respectively accommodating a first left outer portion (313A) and a first right outer portion (314A) of the first support element (31A), thereby reducing the shortest distance (D) between the first filter element (32A) and the first image sensing chip (2A);
wherein the first filter element (32A) has a first left portion (321A) and a first right portion (322A) corresponding to the first left portion (321A), at least one of an upper surface and a lower surface of the first left portion (321A) of the first filter element (32A) and all or a part of a lateral surface of the first left portion (321A) of the first filter element (32A) are covered by a first left inner portion (311A) of the first support element (31A), and at least one of an upper surface and a lower surface of the first right portion (322A) of the first filter element (32A) and all or a part of a lateral surface of the first right portion (322A) of the first filter element (32A) are covered by a first right inner portion (312A) of the first support element (31A);
wherein the top side (1001) of the carrier substrate (1) has a second left top carrier surface (LT2) and a second right top carrier surface (RT2), the second left top carrier surface (LT2) has a second inner surface (LT21) and a second outer surface (LT22) that are flush with each other or have a height difference, and the second right top carrier surface (RT2) has a second inner surface (RT21) and a second outer surface (RT22) that are flush with each other or have a height difference;
wherein the second inner surface (LT21) of the second left top carrier surface (LT2) and the second inner surface (RT21) of the second right top carrier surface (RT2) are configured to carry the second support element (31B), and the second outer surface (LT22) of the second left top carrier surface (LT2) and the second outer surface (RT22) of the second right top carrier surface (RT2) are configured to carry the second lens holder (41B);
wherein, when the second inner surface (LT21) and the second outer surface (LT22) of the second left top carrier surface (LT2) have a height difference, and the second inner surface (RT21) and the second outer surface (RT22) of the second right top carrier surface (RT2) have a height difference, the carrier substrate (1) provides a second left recessed space (LR200) and a second right recessed space (RR200) for respectively accommodating a second left outer portion (313B) and a second right outer portion (314B) of the second support element (31B), thereby reducing the shortest distance (D) between the second filter element (32B) and the second image sensing chip (2B);
wherein the second filter element (32B) has a second left portion (321B) and a second right portion (322B) corresponding to the second left portion (321B), at least one of an upper surface and a lower surface of the second left portion (321B) of the second filter element (32B) and all or a part of a lateral surface of the second left portion (321B) of the second filter element (32B) are covered by a second left inner portion (311B) of the second support element (31B), and at least one of an upper surface and a lower surface of the second right portion (322B) of the second filter element (32B) and all or a part of a lateral surface of the second right portion (322B) of the second filter element (32B) are covered by a second right inner portion (312B) of the second support element (31B).

4. The image-capturing device (S) according to claim 1,
wherein the bottom side (1002) of the carrier substrate (1) has a first left bottom carrier surface (LB1) and a first right bottom carrier surface (RB1), the first left bottom carrier surface (LB 1) has a first inner surface (LB 11) and a first outer surface (LB 12) that both have a height difference, and the first right bottom carrier surface (RB 1) has a first inner surface (RB 11) and a first outer surface (RB12) that both have a height difference;
wherein the first inner surface (LB11) of the first left bottom carrier surface (LB 1) and the first inner surface (RB 11) of the first right bottom carrier surface (RB 1) are configured to carry the first support element (31A), and the first outer surface (LB 12) of the first left bottom carrier surface (LB 1) and the first outer surface (RB12) of the first right bottom carrier surface (RB1) are configured to carry the first image sensing chip (2A);
wherein, the carrier substrate (1) provides a first left recessed space (LR100) and a first right recessed space (RR100) for respectively accommodating a first left outer portion (313A) and a first right outer portion (314A) of the first support element (31A), thereby reducing the shortest distance (D) between the first filter element (32A) and the first image sensing chip (2A);
wherein the bottom side (1002) of the carrier substrate (1) has a second left bottom carrier surface (LB2) and a second right bottom carrier surface (RB2), the second left bottom carrier surface (LB2) has a second inner surface (LB21) and a second outer surface (LB22) that both have a height difference, and the second right bottom carrier surface (RB2) has a second inner surface (RB21) and a second outer surface (RB22) that both have a height difference;
wherein the second inner surface (LB21) of the second left bottom carrier surface (LB2) and the second inner surface (RB21) of the second right bottom carrier surface (RB2) are configured to carry the second support element (31B), and the second outer surface (LB22) of the second left bottom carrier surface (LB2) and the second outer surface (RB22) of the second right bottom carrier surface (RB2) are configured to carry the second image sensing chip (2B);
wherein, the carrier substrate (1) provides a second left recessed space (LR200) and a second right recessed space (RR200) for respectively accommodating a second left outer portion (313B) and a second right outer portion (314B) of the second support element (31B), thereby reducing the shortest distance (D) between the second filter element (32B) and the second image sensing chip (2B).

5. A method of assembling an image-capturing device (S), **characterized by** comprising:
placing at least one test microparticle (P) with a maximum particle size between 5 µm and 25 µm on a test filter element (3);
adjusting a shortest distance (D) from the test filter element (3) to a test image sensor chip (2) until the test image sensor chip (2) cannot capture a light spot generated due to blocking of the at least one test microparticle (P), in order to obtain a reference data of the shortest distance (D) between the test filter element (3) and the test image sensor chip (2) ranging from 30 µm to 200 µm; and
according to the reference data, placing a first image sensing chip (2A), a second image sensing chip (2B), a first filter assembly (3A), a second filter assembly (3B), a first lens assembly (4A) and a second lens assembly (4B) on a carrier substrate (1), so that a shortest distance (D) between a first filter element (32A) of the first filter assembly (3A) and the first image sensing chip (2A) is between 30 µm and 200 µm, and a shortest distance (D) between a second filter element (32B) of the second filter assembly (3B) and the second image sensing chip (2B) is between 30 µm and 200 µm;
wherein the carrier substrate (1) has a top side (1001), a bottom side (1002), a first through opening (1003) and a second through opening (1004), and the first through opening (1003) and the second through opening (1004) are connected between the top side (1001) and the bottom side (1002);
wherein the first image sensing chip (2A) and the second image sensing chip (2B) are disposed on the bottom side (1002) of the carrier substrate (1) and electrically connected to the carrier substrate (1);
wherein the first filter assembly (3A) corresponds to the first image sensing chip (2A), the first filter assembly (3A) includes a first support element (31A) disposed on the carrier substrate (1), and the first filter element (32A) cooperates with the first support element (31A);
wherein the second filter assembly (3B) corresponds to the second image sensing chip (2B), the second filter assembly (3B) includes a second support element (31B) disposed on the carrier substrate (1), and the second filter element (32B) cooperates with the second support element (31B);
wherein the first lens assembly (4A) corresponds to the first image sensing chip (2A), and the first lens assembly (4A) includes a first lens holder (41A) disposed on the top side (1001) of the carrier substrate (1) and a first optical lens (42A) carried by the first lens holder (41A);
wherein the second lens assembly (4B) corresponds to the second image sensing chip (2B), and the second lens assembly (4B) includes a second lens holder (41B) disposed on the top side (1001) of the carrier substrate (1) and a second optical lens (42B) carried by the second lens holder (41B);
wherein the first image sensing chip (2A), the first filter assembly (3A) and the first lens assembly (4A) cooperate with each other to form a first image sensing module (M1) for capturing invisible light;
wherein the second image sensing chip (2B), the second filter assembly (3B) and the second lens assembly (4B) cooperate with each other to form a second image sensing module (M2) for capturing visible light;
wherein the first support element (31A) is configured to carry the first filter element (32A), so that all or a part of the first filter element (32A) is accommodated in the first through opening (1003);
wherein the second support element (31B) is configured to carry the second filter element (32B), so that all or a part of the second filter element (32B) is accommodated in the second through opening (1004).

6. The method of assembling the image-capturing device (S) according to claim 5, further comprising:
placing an electrical connector (5), an ambient light sensor (6), an infrared generator (7), an image processor (8) and a sound receiver (9) on the top side (1001) of the carrier substrate (1) to electrically connect to the carrier substrate (1);
wherein the electrical connector (5), the first image sensing module (M1), the ambient light sensor (6), the infrared generator (7), the second image sensing module (M2), the image processor (8) and the sound receiver (9) are sequentially disposed on the carrier substrate (1), and the ambient light sensor (6) and the infrared generator (7) are closer to the first image sensing module (M1) than the second image sensing module (M2);
wherein the first image sensing chip (2A) is electrically connected to the carrier substrate (1) through a plurality of first conductive materials, and the second image sensing chip (2B) is electrically connected to the carrier substrate (1) through a plurality of second conductive materials;
wherein the first image sensing chip (2A) is an infrared photosensitive chip, the first filter element (32A) is an infrared filter, and the first optical lens (42A) is an infrared lens;
wherein the second image sensing chip (2B) is a visible light photosensitive chip, the second filter element (32B) is a visible light filter, and the second optical lens (42B) is a visible light lens;
wherein a minimum thickness of the first support element (31A) is smaller than a thickness of the first filter element (32A), the minimum thickness of the first support element (31A) is between 0.05 mm and 0.08 mm, and the thickness of the first filter element (32A) is between 1 mm and 1.5 mm;
wherein a minimum thickness of the second support element (31B) is smaller than a thickness of the second filter element (32B), the minimum thickness of the second support element (31B) is between 0.05 mm and 0.08 mm, and the thickness of the second filter element (32B) is between 1 mm and 1.5 mm;
wherein an overall thickness of the second image sensing module (M2) is greater than an overall thickness of the first image sensing module (M1), and the overall thickness of the first image sensing module (M1) and the overall thickness of the second image sensing module (M2) are not greater than 1.8 mm;
wherein the first support element (31A) is only connected to the carrier substrate (1) and is not in contact with the first image sensing chip (2A), and the second support element (31B) is only connected to the carrier substrate (1) and is not in contact with the second image sensing chip (2B);
wherein the first support element (31A) is connected between the carrier substrate (1) and the first filter element (32A) through a plurality of first adhesive layers (H1), and the second support element (31B) is connected between the carrier substrate (1) and the second filter element (32B) through a plurality of second adhesive layers (H2);
wherein the first lens holder (41A) downwardly contacts the first support element (31A) or is separate from the first support element (31A), and the second lens holder (41B) downwardly contacts the second support element (31B) or is separate from the second support element (31B).

7. The method of assembling the image-capturing device (S) according to claim 5,
wherein the top side (1001) of the carrier substrate (1) has a first left top carrier surface (LT1) and a first right top carrier surface (RT1), the first left top carrier surface (LT1) has a first inner surface (LT11) and a first outer surface (LT12) that are flush with each other or have a height difference, and the first right top carrier surface (RT1) has a first inner surface (RT 11) and a first outer surface (RT12) that are flush with each other or have a height difference;
wherein the first inner surface (LT11) of the first left top carrier surface (LT1) and the first inner surface (RT 11) of the first right top carrier surface (RT1) are configured to carry the first support element (31A), and the first outer surface (LT12) of the first left top carrier surface (LT1) and the first outer surface (RT12) of the first right top carrier surface (RT1) are configured to carry the first lens holder (41A);
wherein, when the first inner surface (LT11) and the first outer surface (LT12) of the first left top carrier surface (LT1) have a height difference, and the first inner surface (RT 11) and the first outer surface (RT12) of the first right top carrier surface (RT1) have a height difference, the carrier substrate (1) provides a first left recessed space (LR100) and a first right recessed space (RR100) for respectively accommodating a first left outer portion (313A) and a first right outer portion (314A) of the first support element (31A), thereby reducing the shortest distance (D) between the first filter element (32A) and the first image sensing chip (2A);
wherein the first filter element (32A) has a first left portion (321A) and a first right portion (322A) corresponding to the first left portion (321A), at least one of an upper surface and a lower surface of the first left portion (321A) of the first filter element (32A) and all or a part of a lateral surface of the first left portion (321A) of the first filter element (32A) are covered by a first left inner portion (311A) of the first support element (31A), and at least one of an upper surface and a lower surface of the first right portion (322A) of the first filter element (32A) and all or a part of a lateral surface of the first right portion (322A) of the first filter element (32A) are covered by a first right inner portion (312A) of the first support element (31A);
wherein the top side (1001) of the carrier substrate (1) has a second left top carrier surface (LT2) and a second right top carrier surface (RT2), the second left top carrier surface (LT2) has a second inner surface and a second outer surface that are flush with each other or have a height difference, and the second right top carrier surface (RT2) has a second inner surface and a second outer surface that are flush with each other or have a height difference;
wherein the second inner surface (LT21) of the second left top carrier surface (LT2) and the second inner surface (RT21) of the second right top carrier surface (RT2) are configured to carry the second support element (31B), and the second outer surface (LT22) of the second left top carrier surface (LT2) and the second outer surface (RT22) of the second right top carrier surface (RT2) are configured to carry the second lens holder (41B);
wherein, when the second inner surface (LT21) and the second outer surface (LT22) of the second left top carrier surface (LT2) have a height difference, and the second inner surface (RT21) and the second outer surface (RT22) of the second right top carrier surface (RT2) have a height difference, the carrier substrate (1) provides a second left recessed space (LR200) and a second right recessed space (RR200) for respectively accommodating a second left outer portion (313B) and a second right outer portion (314B) of the second support element (31B), thereby reducing the shortest distance (D) between the second filter element (32B) and the second image sensing chip (2B);
wherein the second filter element (32B) has a second left portion (321B) and a second right portion (322B) corresponding to the second left portion (321B), at least one of an upper surface and a lower surface of the second left portion (321B) of the second filter element (32B) and all or a part of a lateral surface of the second left portion (321B) of the second filter element (32B) are covered by a second left inner portion (311B) of the second support element (31B), and at least one of an upper surface and a lower surface of the second right portion (322B) of the second filter element (32B) and all or a part of a lateral surface of the second right portion (322B) of the second filter element (32B) are covered by a second right inner portion (312B) of the second support element (31B).

8. The method of assembling the image-capturing device (S) according to claim 5,
wherein the bottom side (1002) of the carrier substrate (1) has a first left bottom carrier surface (LB1) and a first right bottom carrier surface (RB1), the first left bottom carrier surface (LB 1) has a first inner surface (LB 11) and a first outer surface (LB 12) that both have a height difference, and the first right bottom carrier surface (RB 1) has a first inner surface (RB 11) and a first outer surface (RB12) that both have a height difference;
wherein the first inner surface (LB11) of the first left bottom carrier surface (LB 1) and the first inner surface (RB 11) of the first right bottom carrier surface (RB1) are configured to carry the first support element (31A), and the first outer surface (LB 12) of the first left bottom carrier surface (LB 1) and the first outer surface (RB12) of the first right bottom carrier surface (RB1) are configured to carry the first image sensing chip (2A);
wherein, the carrier substrate (1) provides a first left recessed space (LR100) and a first right recessed space (RR100) for respectively accommodating a first left outer portion (313A) and a first right outer portion (314A) of the first support element (31A), thereby reducing the shortest distance (D) between the first filter element (32A) and the first image sensing chip (2A);
wherein the bottom side (1002) of the carrier substrate (1) has a second left bottom carrier surface (LB2) and a second right bottom carrier surface (RB2), the second left bottom carrier surface (LB2) has a second inner surface and a second outer surface that both have a height difference, and the second right bottom carrier surface (RB2) has a second inner surface and a second outer surface that both have a height difference;
wherein the second inner surface (LB21) of the second left bottom carrier surface (LB2) and the second inner surface (RB21) of the second right bottom carrier surface (RB2) are configured to carry the second support element (31B), and the second outer surface (LB22) of the second left bottom carrier surface (LB2) and the second outer surface (RB22) of the second right bottom carrier surface (RB2) are configured to carry the second image sensing chip (2B);
wherein, the carrier substrate (1) provides a second left recessed space (LR200) and a second right recessed space (RR200) for respectively accommodating a second left outer portion (313B) and a second right outer portion (314B) of the second support element (31B), thereby reducing the shortest distance (D) between the second filter element (32B) and the second image sensing chip (2B).

9. A portable electronic device (Z) configured to use an image-capturing device (S), **characterized in that** the image-capturing device (S) comprises:
a carrier substrate (1) having a top side (1001), a bottom side (1002), a first through opening (1003) and a second through opening (1004), wherein the first through opening (1003) and the second through opening (1004) are connected between the top side (1001) and the bottom side (1002);
a first image sensing chip (2A) disposed on the bottom side (1002) of the carrier substrate (1) and electrically connected to the carrier substrate (1);
a first filter assembly (3A) corresponding to the first image sensing chip (2A), wherein the first filter assembly (3A) includes a first support element (31A) disposed on the carrier substrate (1) and a first filter element (32A) cooperating with the first support element (31A); and
a first lens assembly (4A) corresponding to the first image sensing chip (2A), wherein the first lens assembly (4A) includes a first lens holder (41A) disposed on the top side (1001) of the carrier substrate (1) and a first optical lens (42A) carried by the first lens holder (41A);
wherein the first image sensing chip (2A), the first filter assembly (3A) and the first lens assembly (4A) cooperate with each other to form a first image sensing module (M1) for capturing invisible light;
wherein the first support element (31A) is configured to carry the first filter element (32A), so that all or a part of the first filter element (32A) is accommodated in the first through opening (1003);
wherein, when at least one first microparticle (P1) with a maximum particle size between 5 µm and 25 µm is located on the first filter element (32A), a shortest distance (D) between the first filter element (32A) and the first image sensing chip (2A) is between 30 µm and 200 µm, so that the first image sensing chip (2A) cannot capture a light spot generated due to blocking of the at least one first microparticle (P 1).

10. The portable electronic device (Z) according to claim 9,
wherein the top side (1001) of the carrier substrate (1) has a first left top carrier surface (LT1) and a first right top carrier surface (RT1), the first left top carrier surface (LT1) has a first inner surface (LT11) and a first outer surface (LT12) that are flush with each other or have a height difference, and the first right top carrier surface (RT1) has a first inner surface (RT 11) and a first outer surface (RT12) that are flush with each other or have a height difference;
wherein the first inner surface (LT11) of the first left top carrier surface (LT1) and the first inner surface (RT 11) of the first right top carrier surface (RT1) are configured to carry the first support element (31A), and the first outer surface (LT12) of the first left top carrier surface (LT1) and the first outer surface (RT12) of the first right top carrier surface (RT1) are configured to carry the first lens holder (41A);
wherein, when the first inner surface (LT11) and the first outer surface (LT12) of the first left top carrier surface (LT1) have a height difference, and the first inner surface (RT 11) and the first outer surface (RT12) of the first right top carrier surface (RT1) have a height difference, the carrier substrate (1) provides a first left recessed space (LR100) and a first right recessed space (RR100) for respectively accommodating a first left outer portion (313A) and a first right outer portion (314A) of the first support element (31A), thereby reducing the shortest distance (D) between the first filter element (32A) and the first image sensing chip (2A);
wherein the first filter element (32A) has a first left portion (321A) and a first right portion (322A) corresponding to the first left portion (321A), at least one of an upper surface and a lower surface of the first left portion (321A) of the first filter element (32A) and all or a part of a lateral surface of the first left portion (321A) of the first filter element (32A) are covered by a first left inner portion (311A) of the first support element (31A), and at least one of an upper surface and a lower surface of the first right portion (322A) of the first filter element (32A) and all or a part of a lateral surface of the first right portion (322A) of the first filter element (32A) are covered by a first right inner portion (312A) of the first support element (31A).
